# EUROPÄISCHE PATENTSCHRIFT

(11) **EP 0 689 563 B1**
(45) Veröffentlichungstag und Bekanntmachung des Hinweises auf die Patenterteilung: **21.05.1997**
(21) Anmeldenummer: 94910369.1
(22) Anmeldetag: 05.03.1994
(51) Int. Cl.: C08J 9/20

(54) **VERFAHREN ZUR HERSTELLUNG VON PERLFÖRMIGEN EXPANDIERBAREN STYROLCOPOLYMERISATEN**
METHOD OF PRODUCING EXPANDABLE STYRENE-POLYMER SPHERES
PROCEDE DE PREPARATION DE COPOLYMERES DE STYRENE EXPANSIBLES EN FORME DE PERLES

(30) Priorität: 18.03.1993 DE 4308636
(43) Veröffentlichungstag der Anmeldung: 03.01.1996
(73) Patentinhaber: BASF AKTIENGESELLSCHAFT, 67056 Ludwigshafen (DE)
(72) Erfinder: WITT, Michael, D-67246 Dirmstein (DE); SCHERZER, Dietrich, D-67433 Neustadt (DE); HAHN, Klaus, D-67281 Kirchheim (DE); NAEGELE, Dieter, D-67550 Worms (DE)
(86) Internationale Anmeldenummer: EP9400662
(87) Internationale Veröffentlichungsnummer: WO9421719

(56) Entgegenhaltungen:
- EP-A- 0 405 325
- FR-A- 2 649 398
- US-A- 3 755 282

## Beschreibung

Die Erfindung betrifft ein Verfahren zur Herstellung perlförmiger expandierbarer Styrolpolymerisate (EPS) mit verbesserter Expandierbarkeit durch Polymerisation von Styrol gegebenenfalls unter Mitverwendung weiterer Comonomerer in wäßriger Suspension in Gegenwart eines Molekülkolloids und einer geringen Menge mindestens einer ungesättigten Carbonsäure oder eines ihrer wasserlöslichen Salze.

Schaumstoffe auf Basis von Styrolpolymerisaten haben als Wärmedämm- und Verpackungsmaterial eine große technische Bedeutung erlangt. Sie werden großtechnisch dadurch hergestellt, daß man zunächst durch Suspensionspolymerisation von Styrol in Gegenwart eines Treibmittels expandierbare Styrolpolymerisate herstellt, diese durch Erhitzen zu Schaumstoffpartikeln aufschäumt und anschließend in Formen zu Formteilen verschweißt.

Die Suspensionspolymerisation erfolgt hierbei in Gegenwart von Suspensionsstabilisatoren und üblicher styrollöslicher Polymerisationskatalysatoren.

Als Suspensionsstabilisatoren werden dabei üblicherweise neben sogenannten Pickering-Stabilisatoren vor allem Molekülkolloide wie Polyvinylalkohole, Hydroxyethylcellulose oder Polyvinylpyrrolidon eingesetzt.

Für eine technische Verwertbarkeit der so hergestellten treibmittelhaltigen EPS-Perlen ist eine wichtige Eigenschaft das Expandiervermögen, wobei hier zwischen der Expandiergeschwindigkeit und der erreichbaren minimalen Schüttdichte differenziert wird.

Zur Erzielung möglichst geringer Schüttgewichte und einer hohen Expandiergeschwindigkeit sind in der Patentliteratur verschiedene Methoden bekannt, die ohne Ausnahme auf eine Verbesserung der Fließfähigkeit der Polymermatrix im plastischen Zustand ausgerichtet sind.

Neben einer gezielten Modellierung der Molekulargewichtsverteilung durch übliche Molmassenregler, beispielsweise tert. Dodecylmercaptan oder DMS (dimeres α-Methylstyrol) (vgl. EP-B-106 129) ist hier auch eine gezielte Verzweigung der Molekülbausteine durch di- oder polyfunktionelle Monomere, beispielsweise Butandioldiacrylat bekannt.

Expandierbare Styrolpolymerisate, die durch Suspensionspolymerisation hergestellt werden, weisen unmittelbar nach der Polymerisation einen gewissen Innenwassergehalt auf.

Hohe Innenwassergehalte treten insbesondere bei schwer entflammbaren expandierbaren Styrolpolymerisaten auf, die als Flammschutzmittel Organobromverbindungen wie beispielsweise Hexabromcyclododecan enthalten.

Aufgabe der vorliegenden Erfindung war es daher, ein Verfahren zur Herstellung von perlförmigen, expandierbaren Styrolpolymerisaten mit verbesserter Expandierbarkeit bereitzustellen, bei dem auf eine gezielte Modellierung der Molekulargewichtsverteilung verzichtet werden kann. Außerdem war es Aufgabe der Erfindung, ein Verfahren zur Herstellung von perlförmigen, expandierbaren Styrolpolymerisaten bereitzustellen, bei dem die Trocknung der nach der Suspensionspolymerisation noch wasserhaltigen expandierbaren Styrolpolymerisatperlen schneller durchgeführt werden kann.

Diese Aufgaben wurden erfindungsgemäß gelöst durch ein Verfahren zur Herstellung von perlförmigen, expandierbaren Styrolpolymerisaten durch Polymerisation von Styrol, gegebenenfalls unter Mitverwendung weiterer Comonomerer, in wäßriger Suspension in Gegenwart von organischen Molekülkolloiden als Suspensionsstabilisatoren und üblicher styrollöslicher Polymerisationskatalysatoren und unter Zusatz eines Treibmittels und gegebenenfalls üblicher Zusatzstoffe in wirksamen Mengen, bei dem die wäßrige Suspension mindestens eine olefinisch ungesättigte Carbonsäure oder eines ihrer wasserlöslichen Salze in einer Menge, bezogen auf die organische Phase, von 0,002 bis 0,3 Gew.-% Carboxylatanionen enthält.

In der US-A-3,755,282 ist die Suspensionspolymerisation von vinylaromatischen Monomeren in Anwesenheit von 0,2 bis 1 Gew.-%, bezogen auf das Monomere, eines Phosphatsuspensionsmittels (beispielsweise Magnesiumphosphat) und einer α,β-ungesättigten Carbonsäure als einzigem Extender beschrieben. Extender sind hierbei Verbindungen, welche die suspensionsstabilisierende Wirkung des feinverteilten Phosphats erhöhen. Im Ergebnis werden große, nahezu sphärische Perlen mit einer geringen Perlgrößenverteilung erhalten. Als Beispiele für die α,β-ungesättigte Carbonsäure sind u.a. Acrylsäure, Methacrylsäure, Crotonsäure, Maleinsäure und Fumarsäure genannt. Die Mitverwendung von organischen Molekülkolloiden wird in der US-A-3,755,282 also ausdrücklich ausgeschlossen.

Styrolpolymerisate im Sinne der Erfindung sind Polystyrol und Mischpolymerisate des Styrols mit anderen α,β-olefinisch ungesättigten Verbindungen, die mindestens 50 Gewichtsteile Styrol einpolymerisiert enthalten. Im erfindungsgemäßen Verfahren kommen daher als Comonomere z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol oder auch geringe Mengen an Verbindungen, die zwei polymerisierbare Doppelbindungen enthalten, wie Butadien, Divinylbenzol oder Butandioldiacrylat.

Im erfindungsgemäßen Verfahren werden als Treibmittel, bezogen auf das Styrolpolymerisat, im allgemeinen 1 bis 10 Gew.-%, vorzugsweise 3 bis 8 Gew.-%, eines C₃- bis C₇-Kohlenwasserstoffs (wie Propan, Butan, Isobutan, n-Pentan, i-Pentan, Neopentan und/oder Hexan) und/oder Kohlendioxid eingesetzt.

Bei Verwendung von Kohlendioxid als Treibmittel oder Treibmittelbestandteil kann in vorteilhafter Weise ein Kohlendioxid-Absorber gemäß der deutschen Patentanmeldung P 41 37 405.3 eingesetzt werden.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z.B. Glycerinester oder Hydroxycarbonsäureester. Die Zusatzstoffe können je nach der beabsichtigten Wirkung in den Teilchen homogen verteilt oder als Oberflächenbeschichtung vorliegen.

Entsprechend werden die Zusatzstoffe im erfindungsgemäßen Verfahren zugegeben oder anschließend auf die erfindungsgemäß hergestellten expandierbaren Styrolpolymerisate aufgebracht.

Im erfindungsgemäßen Verfahren werden perlförmige expandierbare Styrolpolymerisate hergestellt durch Polymerisation von Styrol, ggf. zusammen mit bis zu 50 Gew.-% der obengenannten Comonomeren, in wäßriger Suspension, wobei vor, während oder nach der Polymerisation die oben beschriebenen Treibmittel und gegebenenfalls übliche Zusatzstoffe in wirksamen Mengen zugesetzt werden.

Man kann die Polymerisation auch in Gegenwart eines üblichen Kettenüberträgers ausführen, der das Molekulargewicht regelt. Vorzugsweise wird tert.-Dodecylmercaptan oder DMS (dimeres α-Methylstyrol) verwendet. Der Regler wird im allgemeinen in einer Menge von 0,0001 bis 0,01 Gew.-%, bezogen auf Styrol, verwendet.

Das erfindungsgemäße Verfahren wird in Gegenwart eines organischen Molekülkolloids durchgeführt. Erfindungsgemäß sind Polyvinylpyrrolidon, Polyvinylalkohole und Hydroxyethylcellulose bevorzugt.

Die Molekülkolloide weisen im allgemeinen eine gewichtsmittlere Molmasse von mindestens 10⁶ g/mol auf und werden vorteilhaft in einer Konzentration von 0,1 bis 0,5 Gew.-%, bezogen auf die wäßrige Phase, eingesetzt. Bei den Polyvinylalkoholen ist ein Verseifungsgrad von 92 bis 97 % vorteilhaft.

Für das erfindungsgemäße Verfahren wesentlich ist die Verwendung mindestens einer olefinisch ungesättigten Carbonsäure in einer Menge, bezogen auf die organische Phase, von 0,002 bis 0,3 Gew.-%, vorzugsweise von 0,01 bis 0,06 Gew.-% und besonders bevorzugt 0,02 bis 0,03 Gew.-% Carboxylatanionen.

Die olefinisch ungesättigten Carbonsäuren können sowohl als freie Säuren als auch in Form ihrer wasserlöslichen Salze, insbesondere ihrer Alkalisalze, eingesetzt werden.

Als olefinisch ungesättigte Carbonsäuren sind erfindungsgemäß insbesondere α,β-ungesättigte Carbonsäuren geeignet. Beispiele hierfür sind Acrylsäure, Methacrylsäure und Sorbinsäure. Acrylsäure und Sorbinsäure sowie deren Alkalisalze werden besonders bevorzugt eingesetzt.

Die olefinisch ungesättigten Carbonsäuren oder ihre wasserlöslichen Salze können teilweise oder vollständig in oligomerer oder polymerer Form eingesetzt werden. Ein Beispiel hierfür ist das Polysalz ® S der BASF Aktiengesellschaft. Hierbei handelt es sich um ein polymeres Natriumacrylat mit einer gewichtsmittleren Molmasse von 5000 in Form einer 45 %igen wäßrigen Lösung.

Die olefinisch ungesättigten Carbonsäuren werden im erfindungsgemäßen Verfahren der wäßrigen Suspension vorzugsweise zugesetzt, bevor die Polymerisation einen Umsatz von 50 %, bezogen auf die Ausgangsmonomeren, erreicht hat.

Die im erfindungsgemäßen Verfahren erhaltenen perlförmigen, expandierbaren Styrolpolymerisate werden nach beendeter Polymerisation auf bekannte Weise von der wäßrigen Phase abgetrennt, gewaschen und getrocknet.

Überraschenderweise wurde hierbei gefunden, daß bei den erfindungsgemäß hergestellten perlförmigen, expandierbaren Styrolpolymerisaten der Innenwassergehalt rascher und damit effizienter gesenkt werden kann als im Falle bekannter Herstellungsverfahren. Dies ist insbesondere für expandierbare Styrolpolymerisate von Bedeutung, die ein Flammschutzmittel enthalten. So weisen expandierbare Styrolpolymerisate, die als Flammschutzmittel organische Bromverbindungen enthalten, häufig Innenwassergehalte auf, die erst durch eine mehrstündige Trocknung im Luftstrom gesenkt werden müssen.

Die erfindungsgemäß hergestellten treibmittelhaltigen Styrolpolymerisat-Teilchen haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,1 und 2 cm und einer Schüttdichte zwischen 0,005 und 0,1 g/cm³ vorgeschäumt werden.

Die vorgeschäumten Teilchen können dann nach üblichen Verfahren zu Schaumstoff-Formteilen mit einer Dichte von 0,005 bis 0,1 g/cm³ ausgeschäumt werden.

Die in den Beispielen genannten Teile sind Gewichtsteile.

### Beispiele 1 bis 4 und Vergleichsbeispiele 1 und 2

### Beispiel 1

### Polymerisation

In einem druckfesten Rührkessel aus korrosionsfreiem Stahl wurde eine Mischung aus 150 Teilen Wasser, 0,1 Teilen Natriumpyrophosphat, 100 Teilen Styrol, 0,15 Teilen Dibenzoylperoxid, 0,25 Teilen t-Butylperbenzoat und 0,05 Teilen Kaliumsorbat unter Rühren innerhalb von 2 h auf 85°C erhitzt. Bei Erreichen von 85°C wurden 1,5 Teile einer 10 %igen wäßrigen Lösung von Polyvinylpyrrolidon (K-Wert nach Fikentscher: 90) zugegeben. Anschließend wurde die Temperatur kontinuierlich innerhalb von 4 h auf 125°C erhöht. 30 min vor Erreichen der maximalen Temperatur wurden 7 Teile Pentan in den Rührkessel dosiert. Anschließend wurde die Polymerisation während 6 h bei einer konstanten Temperatur von 125°C zu Ende geführt. Der Ansatz wurde dann abgekühlt und das Polymerisat von der wäßrigen Phase abgetrennt und gewaschen.

### Aufarbeitung

Das oberflächlich auf den Perlen anhaftende Wasser wurde durch ein 10minütiges Absaugen auf einer Nutsche entfernt. Unmittelbar anschließend wurden die erhaltenen Perlen für 30 min in einem Warmluftstrom konditioniert und anschließend in Siebfraktionen aufgetrennt. Die mittlere Teilchengröße wurde nach Rosin-Rammler-Sperling-Bennett gemäß DIN 66 145 bestimmt.

### Beschichtung

100 Teile des expandierbaren Polystyrol-Granulates mit der Perlgrößenfraktion von 0,7 bis 1,0 mm Durchmesser wurden durch Auftrommeln im Schaufelmischer jeweils während 4 min mit 0,4 Teilen Glycerinmonostearat beschichtet.

### Vorschäumen der EPS-Perlen

Ein Teil dieser beschichteten Perlen wurde in einem diskontinuierlichen Vorschäumer, Typ Händle, mit strömendem Wasserdampf beaufschlagt. Unter standardisierten Bedingungen (EPS-Einwaage 1,5 kg, Dampfdruck von 1,3 bar Überdruck) konnte das Expandierverhalten quantifiziert werden. Hierzu wurden die Schäumzeiten bis zum Erreichen von drei in unterschiedlicher Höhe angebrachten Lichtschranken bestimmt.

Mit einem anderen Teil der beschichteten Perlen wurde in einem kontinuierlichen Vorschäumer, Typ Rauscher C69, der Produktdurchsatz bei vorgegebener Schüttdichte sowie die erreichbare minimale Schüttdichte bestimmt. Die Ergebnisse sind in der Tabelle 1 angegeben.

### Beispiel 2

Es wurde wie in Beispiel 1 gearbeitet, in der wäßrigen Suspension wurden jedoch zu Beginn der Polymerisation 0,05 Teile Natriumacrylat vorgelegt.

### Beispiel 3

Analog Beispiel 2, jedoch wurden hier 0,015 Teile Acrylsäure vorgelegt.

### Vergleichsbeispiel 1

Es wurde gearbeitet wie in Beispiel 1, jedoch keine olefinisch ungesättigte Carbonsäure zugegeben.

### Beispiel 4

Es wurde gearbeitet wie in Beispiel 1, wobei in der organischen Phase zusätzlich 1 Teil Hexabromcyclododecan und 0,3 Teile Dicumylperoxid eingesetzt wurden.

Bei drei ausgewählten Siebschnitten (1,0 bis 1,6 mm; 0,7 bis 1,0 mm; 0,4 bis 0,7 mm) wurde nach den in der Tabelle 2 angegebenen unterschiedlichen Trocknungszeiten in einen Luftstrom bei 32°C der in den Perlen vorliegende Innenwassergehalt durch Karl-Fischer-Titration bestimmt.

### Vergleichsbeispiel 2

Es wurde gearbeitet wie in Beispiel 4, jedoch das Kaliumsorbat weggelassen.

Die im Beispiel 4 und Vergleichsbeispiel 2 bestimmten Innenwassergehalte sind in der Tabelle 2 angegeben.

**Tabelle 1**

| Beispiel | ungesättigte Carbonsäure | mittl.Teilchengröße [mm] | Schäumzeiten [s] | Durchsatz [kg·h⁻¹] | minimale Schüttdichte [g·l⁻¹] |
|---|---|---|---|---|---|
| 1 | 0,05 Teile Kaliumsorbat | 1,3 | 14/19/25 | 220 | 15,7 |
| 2 | 0,05 Teile Natriumacrylat | 1,01 | 13/18/23 | 230 | 15,5 |
| 3 | 0,015 Teile Acrylsäure | 0,96 | 14/19/26 | 215 | 15,9 |
| Vergleichsbeispiel 1 | - | 1,04 | 15/20/28 | 190 | 16,4 |

**Tabelle 2**

| | ungesättigte Carbonsäure | Trocknungszeit [h] | Innenwassergehalt / Gew.-% | | |
|---|---|---|---|---|---|
| | | | 1,0 - 1,6 mm | 0,7 - 1,0 mm | 0,4 - 0,7 mm |
| Beispiel 4 | 0,05 Teile Kaliumsorbat | 0 | 1,04 | 1,10 | 1,20 |
| | | 1 | 0,32 | 0,25 | 0,20 |
| | | 2 | 0,07 | 0,05 | 0,03 |
| Vergleichsbeispiel 2 | - | 0 | 0,95 | 1,20 | 1,20 |
| | | 1 | 0,80 | 0,80 | 0,70 |
| | | 2 | 0,45 | 0,40 | 0,35 |

## Patentansprüche

1. Verfahren zur Herstellung von perlförmigen expandierbaren Styrolpolymerisaten durch Polymerisation von Styrol, gegebenenfalls unter Mitverwendung, von bis zu 50 Gew.-%, bezogen auf das Gewicht der Styrolpolymerisate, weiterer Comonomerer, in wäßriger Suspension in Gegenwart von organischen Molekülkolloiden als Suspensionsstabilisatoren und üblicher styrollöslicher Polymerisationskatalysatoren und unter Zusatz eines Treibmittels und gegebenenfalls üblicher Zusatzstoffe in wirksamen Mengen, dadurch gekennzeichnet, daß die wäßrige Suspension mindestens eine olefinisch ungesättigte Carbonsäure oder eines ihrer wasserlöslichen Salze in einer Menge, bezogen auf die organische Phase, von 0,002 bis 0,3 Gew.-% Carboxylatanionen enthält.

2. Verfahren nach Anspruch 1, dadurch gekennzeichnet, daß eine α,β-ungesättigte Carbonsäure oder eines ihrer wasserlöslichen Salze eingesetzt wird.

3. Verfahren nach Anspruch 2, dadurch gekennzeichnet, daß als α,β-ungesättigte Carbonsäure Acrylsäure oder Sorbinsäure oder eines ihrer wasserlöslichen Salze eingesetzt wird.

4. Verfahren nach Anspruche 1, dadurch gekennzeichnet, daß die olefinisch ungesättigte Carbonsäure oder eines ihrer wasserlöslichen Salze in einer Menge, bezogen auf die organische Phase, von 0,01 bis 0,06 Gew.-% Carboxylat eingesetzt wird.

## Claims

1. A process for the preparation of bead-form expandable styrene polymers by polymerizing styrene, if desired in the presence of up to 50% by weight, based on the weight of the styrene polymers, of further comonomers, in aqueous suspension in the presence of organic molecular colloids as suspension stabilizers and conventional styrene-soluble polymerization catalysts and with addition of a blowing agent and, if desired, conventional additives in effective amounts, wherein the aqueous suspension contains at least one olefinically unsaturated carboxylic acid or a water-soluble salt thereof in an amount, based on the organic phase, of from 0.002 to 0.3% by weight of carboxylate anions.

2. A process as claimed in claim 1, wherein an α,β-unsaturated carboxylic acid or a water-soluble salt thereof is employed.

3. A process as claimed in claim 2, wherein the α,β-unsaturated carboxylic acid employed is acrylic acid or sorbic acid or a water-soluble salt thereof.

4. A process as claimed in claim 1, wherein the olefinically unsaturated carboxylic acid or a water-soluble salt thereof is employed in an amount, based on the organic phase, of from 0.01 to 0.06% by weight of carboxylate.

## Revendications

1. Procédé de fabrication de polymères du styrène expansibles, en forme de perles, par la polymérisation du styrène, éventuellement, sous utilisation conjointe de jusqu'à 50% en poids, par rapport au poids des polymères du styrène, d'autres comonomères, en suspension aqueuse, en présence de colloïdes moléculaires organiques, à titre de stabilisateurs de suspension et de catalyseurs de polymérisation solubles dans le styrène habituels et en recourant à l'emploi d'un agent porogène et, éventuellement, d'additifs habituels, en proportions actives, caractérisé en ce que la suspension aqueuse contient au moins un acide carboxylique, à insaturation oléfinique, ou un sel soluble d'un tel acide, en une proportion, par rapport à la phase organique, de 0,002 à 0,3% en poids d'anions carboxylate.

2. Procédé suivant la revendication 1, caractérisé en ce que l'on utilise un acide carboxylique α,β-insaturé, ou un sel soluble dans l'eau d'un tel acide.

3. Procédé suivant la revendication 2, caractérisé en ce que l'on utilise, à titre d'acide carboxylique α,β-insaturé, de l'acide acrylique, ou de l'acide sorbique, ou un sel soluble dans l'eau de ces acides.

4. Procédé suivant la revendication 1, caractérisé en ce que l'on utilise l'acide carboxylique, à insaturation oléfinique ou de ses sels, en une proportion, par rapport à la phase organique, de 0,01 à 0,06% en poids de carboxylate.
